# EUROPEAN PATENT APPLICATION

(11) **EP 4 549 600 A1**
(43) Date of publication of application: **07.05.2025**
(21) Application number: 23871521.3
(22) Date of filing: 10.08.2023
(51) Int. Cl.: C21D 9/46, C21D 9/56, C22C 38/00, C22C 38/60, C21D 1/26, C21D 1/42, G06N 20/00

(54) **CONTINUOUS ANNEALING FACILITY, CONTINUOUS ANNEALING METHOD, METHOD FOR PRODUCING COLD-ROLLED STEEL SHEET, AND METHOD FOR PRODUCING PLATED STEEL SHEET**

(30) Priority: 27.09.2022 JP 2022154250
(71) Applicant: JFE Steel Corporation, Tokyo 100-0011 (JP)
(72) Inventor: OSUKA Kenichi, Tokyo 100-0011 (JP); KOMINE Shinsuke, Tokyo 100-0011 (JP); TAKEDA Gentaro, Tokyo 100-0011 (JP)
(74) Representative: Scott, Stephen John
(86) International application number: PCT/JP2023/029324
(87) International publication number: WO 2024/070279

(57) **Abstract**

Provided are a continuous annealing line, a continuous annealing method, a method of producing a cold-rolled steel sheet, and a method of producing a coated or plated steel sheet that precisely predict a phase fraction of a steel sheet under a high temperature condition and rapidly adjust an annealing condition to reflect a predicted phase fraction variation. The continuous annealing line is for a steel sheet and includes a heating zone (6), a soaking zone (7), and a cooling zone (8), in this order, at least one induction heating device (9) disposed between the soaking zone (7) and the cooling zone (8), and a control device that sets operating conditions of the induction heating device based on a phase fraction during annealing obtained by a phase fraction prediction model.

## Description

### TECHNICAL FIELD

The present disclosure relates to continuous annealing lines, continuous annealing methods, methods of producing cold-rolled steel sheets, and methods of producing coated or plated steel sheets. The present disclosure relates, in particular, to a continuous annealing line, a continuous annealing method, a method of producing a cold-rolled steel sheet, and a method of producing a coated or plated steel sheet for producing a high strength steel sheet used as automobile structural material and the like.

### BACKGROUND

In the production of thin steel sheets for automobiles, continuously cast slabs are heavily processed by hot rolling and cold rolling until reaching final sheet thickness. In subsequent annealing treatment, cold work microstructure recovery, recrystallization, and grain growth, as well as transformation microstructure control, are carried out to adjust the balance between strength and workability.

In recent years, continuous annealing furnaces are typically used in annealing treatment, in which heating, soaking, and cooling are carried out continuously while conveying steel sheets connected as a continuous strip. Further, depending on steel sheet application, hot-dip galvanizing treatment, overaging treatment, and the like are carried out after the cooling.

Radiant tube burners are typically used as heaters in annealing furnaces, which use gas combustion to heat metal tubes (radiant tubes) and indirectly heat steel sheets with the radiant heat. Further, in the production of hot-dip galvanized steel sheets, direct flame furnaces, in which a gas combustion flame is directly jetted onto steel sheets to secure coatability, are sometimes employed in preheating portions of heating furnaces.

Radiant tube furnaces heat steel sheets by radiant heat from the radiant tubes and furnace wall, and therefore the volume of the heat source is very large and thermal inertia is large. This makes it difficult to quickly keep up with changes in temperature setting. Further, towards the end of heating, the temperature increase rate of steel sheets is slower and a certain amount of time for soaking is required for microstructure control, which increases the required furnace length and further increases thermal inertia, resulting in a greater delay in reaching a target temperature. As a result, in the process of continuously processing coils, a problem may occur in that temperature of a portion of a steel sheet does not fall within a defined annealing temperature range, which can cause problems such as lower yield rate due to variations in mechanical properties and lower productivity due to changes in line speed for temperature control.

Further, the transformation behavior of a steel sheet cannot be uniquely determined by temperature alone, and is affected by the conditions of preceding processes: casting, hot rolling, and cold rolling. Therefore, even when the annealing temperature is precisely controlled, the mechanical properties of the final product may deviate from a target range. In order to solve this problem, it is desirable to determine the phase fraction of the steel sheet microstructure due to annealing.

In response to the problems described above, Patent Literature (PTL) 1 describes a technology to improve responsiveness by installing an induction heating device between the preheating zone and the heating zone (in a direct flame heating furnace) or between a plurality of heating zones of a direct flame heating furnace to supplement heating capacity. PTL 2 describes a technology for determining the phase fraction of a steel sheet from changes in magnetic properties. PTL 3 describes a technology for controlling annealing conditions to obtain a microstructure having a desired mechanical property by predicting changes in a phase fraction of a steel sheet based on a steel sheet temperature measurement result.

### CITATION LIST

### Patent Literature

PTL 1: JP H11-061277 A
PTL 2: JP 2000-144262 A
PTL 3: JP 2020-509243 A

### SUMMARY

### (Technical Problem)

The technology of PTL 1 requires low steel sheet temperature at the exit from the direct-type heating furnace to prevent excessive oxidation of the steel sheet surface, and the radiant tube furnace also needs to be heated. This makes it difficult to shorten furnace length, and the effect of changing the furnace temperature setting is far-reaching. Further, it is stated that the effect of furnace temperature fluctuations can be absorbed by high speed control of the output of the induction heating device, but the direct-type heating furnace following the induction heating device focuses on controlling steel sheet oxidation, making it difficult to flexibly control steel sheet temperature. Therefore, the effect of absorbing the influence of furnace temperature fluctuation cannot be fully demonstrated.

The technology of PTL 2 measures changes in a phase fraction of a steel sheet, and makes it possible to control production conditions based on a measurement result, but the controllability of a conventional annealing furnace is low. That is, even when a transformation rate can be measured, the controllability of the furnace is insufficient when annealing conditions are to be changed greatly.

Although the technology of PTL 3 is able to predict a phase fraction, microstructure is controlled by adjusting a cooling condition to reflect a predicted result of a phase fraction. When only a cooling condition is controlled, responsiveness is low and achieving high speed and high precision is difficult.

In view of the above problems, it would be helpful to provide a continuous annealing line, a continuous annealing method, a method of producing a cold-rolled steel sheet, and a method of producing a coated or plated steel sheet that precisely predict a phase fraction of a steel sheet under a high temperature condition and rapidly adjust an annealing condition to reflect a predicted phase fraction variation.

### (Solution to Problem)

(1) A continuous annealing line according to an embodiment of the present disclosure is
   a continuous annealing line for a steel sheet, comprising a heating zone, a soaking zone, and a cooling zone, in this order, and further comprising:
   at least one induction heating device disposed between the soaking zone and the cooling zone; and
   a control device configured to set an operating condition of the induction heating device based on a phase fraction during annealing obtained by a phase fraction prediction model.
(2) The continuous annealing line according to (1), as an embodiment of the present disclosure, wherein
   the phase fraction prediction model is a machine learning model generated using labeled data in which composition, a dimension, and a temperature of the steel sheet and an operating condition of a continuous annealing furnace are input variables and the phase fraction of the steel sheet during annealing is an output variable.
(3) The continuous annealing line according to (2), as an embodiment of the present disclosure, wherein
   the dimension of the steel sheet includes the thickness of the steel sheet,
   the temperature of the steel sheet includes steel sheet temperature immediately before the start of heating and the maximum arrival temperature of the induction heating device, and
   the operating condition of the continuous annealing furnace includes the line speed of the steel sheet.
(4) A continuous annealing method according to an embodiment of the present disclosure is
   a continuous annealing method for a steel sheet that is passed through a heating zone, a soaking zone, and a cooling zone, in this order, wherein
   at least one induction heating device is disposed between the soaking zone and the cooling zone, the method comprising:
      a step of setting an operating condition of the induction heating device based on a phase fraction during annealing obtained by a phase fraction prediction model.
(5) The continuous annealing method according to (4), as an embodiment of the present disclosure, wherein
   the phase fraction prediction model is a machine learning model generated using labeled data in which composition, a dimension, and a temperature of the steel sheet and an operating condition of a continuous annealing furnace are input variables and the phase fraction of the steel sheet during annealing is an output variable.
(6) The continuous annealing method according to (5), as an embodiment of the present disclosure, wherein
   the dimension of the steel sheet includes the thickness of the steel sheet,
   the temperature of the steel sheet includes steel sheet temperature immediately before the start of heating and the maximum arrival temperature of the induction heating device, and
   the operating condition of the continuous annealing furnace includes the line speed of the steel sheet.
(7) The continuous annealing method according to any one of (4) to (6), as an embodiment of the present disclosure, wherein
   the induction heating device heats the steel sheet at a rate of 10 °C/s or more and 200 °C/s or less, and
   cooling of the steel sheet in the cooling zone is started in 10 s or less after the end of heating by the induction heating device.
(8) A method of producing a cold-rolled steel sheet according to an embodiment of the present disclosure, the method comprising
   annealing of the steel sheet, which is a cold-rolled steel sheet, by an annealing method adjusted by the continuous annealing method according to (7).
(9) A method of producing a coated or plated steel sheet according to an embodiment of the present disclosure, the method comprising
   applying a coating or plating treatment to a surface of the steel sheet annealed by the method of producing a cold-rolled steel sheet according to (8).
(10) The method of producing a coated or plated steel sheet according to (9), as an embodiment of the present disclosure, wherein
   the coating or plating treatment is electrogalvanization treatment, hot-dip galvanizing treatment, or galvannealing treatment.

### (Advantageous Effect)

The present disclosure provides a continuous annealing line, a continuous annealing method, a method of producing a cold-rolled steel sheet, and a method of producing a coated or plated steel sheet that precisely predict a phase fraction of a steel sheet under a high temperature condition and rapidly adjust an annealing condition to reflect a predicted phase fraction variation. This makes it possible to produce a thin steel sheet and the like having a targeted mechanical property more consistently than with a conventional annealing furnace.

### BRIEF DESCRIPTION OF THE DRAWINGS

In the accompanying drawings:
FIG. 1 is a schematic diagram illustrating a hot-dip galvanizing process provided with a continuous annealing line according to an embodiment;
FIG. 2 is a diagram illustrating an example of steel sheet temperature history; and
FIG. 3 is a flowchart illustrating an example of a continuous annealing method.

### DETAILED DESCRIPTION

Hereinafter, with reference to the drawings, a continuous annealing line, a continuous annealing method, a method of producing a cold-rolled steel sheet, and a method of producing a coated or plated steel sheet are described according to embodiments of the present disclosure.

### <Line configuration>

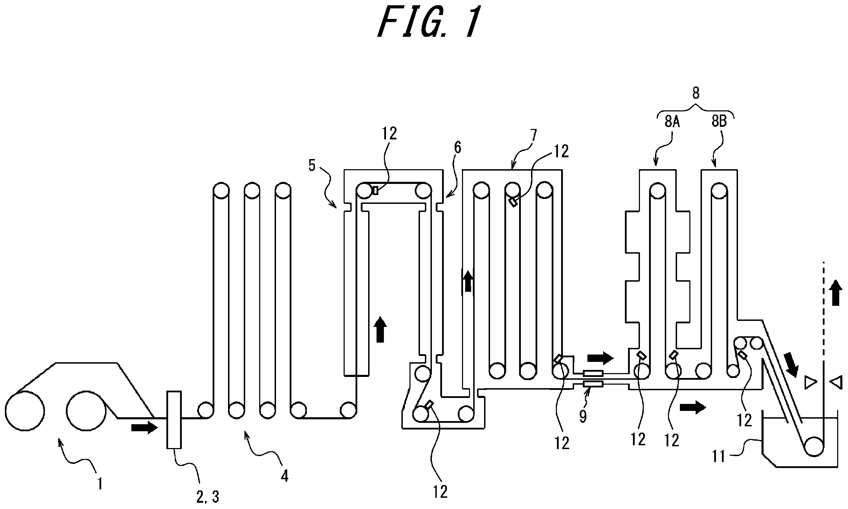

FIG. 1 illustrates a portion of a hot-dip galvanizing process provided with the continuous annealing line according to the present embodiment. According to the present embodiment, a steel material produced using the hot-dip galvanizing process is a thin steel sheet. Further, the steel material produced is a cold-rolled steel sheet. The arrows in FIG. 1 indicate the direction of line travel. Hereinafter, the upstream side in this direction of travel may be described as "before/previous" and the downstream side as "after/subsequent". The continuous annealing line includes a payoff reel 1, a welder 2, an electrolytic cleaning device 3, an entry-side looper 4, a preheating zone 5, a heating zone 6, a soaking zone 7, and a cooling zone 8. Further, the continuous annealing line includes an induction heating device 9 (hereinafter, also referred to as "IH"). The continuous annealing line includes at least one induction heating device 9. According to the present embodiment, the cooling zone 8 includes a first cooling zone 8A and a second cooling zone 8B. The continuous annealing line may further include a galvanizing tank (zinc pot 11) into which a thin steel sheet cooled to a defined temperature is dipped, an alloying zone, a holding zone, a final cooling zone, a temper rolling mill, a delivery-side looper, a tension reel, and the like.

A thin steel sheet coiled in a previous process is uncoiled by the payoff reel 1. After passing through the preheating zone 5, the uncoiled thin steel sheet enters a continuous annealing furnace. The continuous annealing line includes the preheating zone 5 followed by the heating zone 6, the soaking zone 7, and the cooling zone 8, in this order. In the continuous annealing line, the induction heating device 9 is disposed between the soaking zone 7 and the cooling zone 8.

Further, the continuous annealing line includes a mechanism to adjust the output of the induction heating device 9 based on a predicted value of the γ-phase fraction by the transformation rate prediction model. Here, the continuous annealing line according to the present embodiment is not limited to the configuration illustrated in FIG. 1, and may be varied according to a target quality of a steel sheet to be produced. For example, the continuous annealing furnace may be followed by the zinc pot 11 and an alloying zone or the like, the zinc pot 11 may be omitted, etc. Further, portions of the continuous annealing line may be subdivided. For example, the soaking zone 7 may be divided so that each portion of the divided soaking zone 7 controls the atmosphere or temperature independently.

### <Component details>

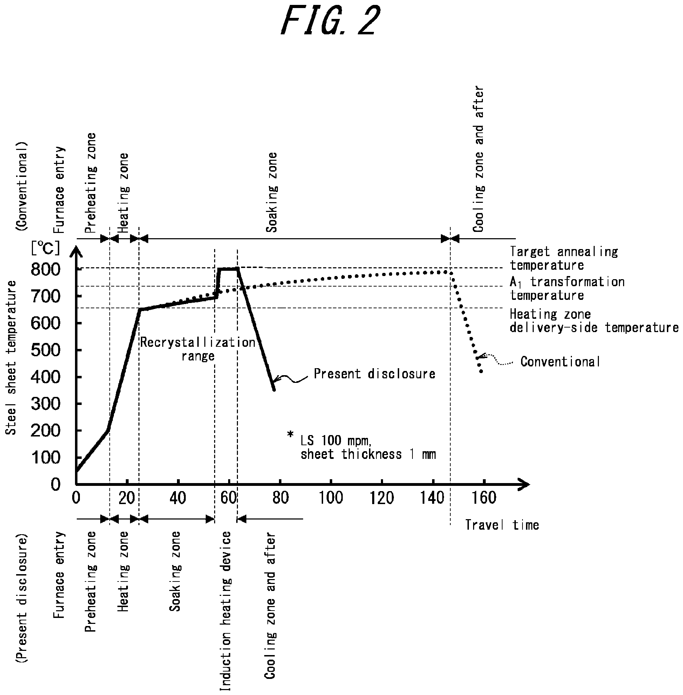

FIG. 2 illustrates the temperature history of a steel sheet when annealed in a typical conventional technology annealing furnace and when annealed in the annealing furnace according to the present embodiment. The vertical axis is steel sheet temperature. The horizontal axis is travel time. The line speed is 100 mpm. The thickness of the steel sheet is 1 mm. The temperature history according to the present embodiment is indicated by a solid line, and corresponding processes are indicated below the chart. The temperature history according to conventional technology is indicated by a dotted line, and corresponding processes are indicated above the chart. As illustrated in FIG. 2, the annealing furnace according to the present embodiment requires less time for processing than the conventional technology due to the configuration described below.

### (Preheating zone)

A thin steel sheet paid out from the payoff reel 1 at room temperature to about 100 °C first enters the preheating zone 5, to be heated to about 200 °C. The temperature of the thin steel sheet may be simply increased by heating. According to the present embodiment, the preheating zone 5 uses high-temperature exhaust air produced in the heating zone 6.

### (Heating zone)

The steel sheet then enters the heating zone 6, where steel sheet temperature is heated to about 600 °C to 700 °C. The temperature of the thin steel sheet may be simply increased by heating. According to the present embodiment, the heating zone 6 uses a direct flame heating furnace system to raise the temperature to a certain level in a short time and to control surface conditions. In addition to high heating capacity and small furnace volume, the direct flame heating furnace allows flexible control of the redox reaction at the steel sheet surface in consideration of a subsequent coating or plating process.

### (Soaking zone)

The main role of the soaking zone 7 is to progress the recrystallization of α-phase. However, at this time, it is acceptable if some portions pass through the A₁ transformation temperature. It is desirable to use a radiant heating (radiant tube heating) system by gas combustion as the heating system of the soaking zone 7, due to high efficiency and heating uniformity. The soaking zone 7 may be configured as a large single furnace shell. Further, the soaking zone 7 may be configured to have two or more compartments, with each compartment separated by a thermal barrier or the like, to hold and heat in a target temperature range determined for each compartment. According to the present embodiment, the soaking zone 7 holds or carries out slow heating so that the temperature of the steel sheet is in a temperature range lower than the A₁ transformation temperature (about 600 °C to 730 °C) to secure residence time in the recrystallization temperature range and to suppress residual unrecrystallized α-phase. Here, the A₁ transformation temperature is the temperature at which austenite transformation occurs, and as an example, the set furnace temperature is 730 °C. In other words, austenite phase begins to develop at temperatures equal to or greater than the A₁ transformation temperature.

Here, when the temperature of the steel sheet in the soaking zone 7 is too low, α-phase recrystallization does not progress and sufficient workability is not obtainable. On the other hand, when the temperature of the steel sheet in the soaking zone 7 is at least the A₁ transformation temperature, α-phase recrystallization grains become coarse and strength becomes insufficient. The A₁ transformation temperature may vary slightly depending on the composition of the steel sheet. Therefore, the recrystallization temperature range is preferably predicted in advance by measurement, calculation, or simulation, and set taking into consideration the error range during annealing.

When the residence time of the steel sheet in the soaking zone 7 is too short, α-phase recrystallization will not progress sufficiently, and when too long, crystal grains become coarse and mechanical properties degrade. Therefore, optimal residence time was studied in advance through experiments, and it was found that 20 s to 60 s is required. When less than 20 s, α-phase recrystallization progress is insufficient, resulting in poor workability, and when more than 60 s, portions having coarse crystal grains develop, resulting in non-uniform strength. Therefore, in the soaking zone 7, the temperature of the steel sheet is held in the temperature range lower than the A₁ transformation temperature for 20 s to 60 s.

In the case of slow heating in the soaking zone 7, it suffices that the residence time in the recrystallization temperature range is the time described above. However, when slow heating in the soaking zone 7, the heating rate is preferably 5 °C/s or less. When rapidly heating at a rate that exceeds 5 °C/s, it becomes impossible to suppress residual unrecrystallized α-phase.

After the residence time in the recrystallization temperature range in the soaking zone 7 is secured, gradual heating may be carried out to temperatures equal to or greater than the A₁ transformation temperature, as long as the temperature is less than 750 °C. However, the heating rate is preferably 5 °C/s or less.

Although the continuous annealing line according to the present embodiment includes the soaking zone 7 using a radiant tube furnace, a configuration without such a soaking zone 7 is possible as long as the configuration has the function of securing enough hold time to allow α-phase recrystallization to proceed. For example, the soaking zone 7 is not limited to including a radiant tube furnace. Further, the continuous annealing line may be configured without the soaking zone 7 and the heating zone 6 may have the ability to secure enough hold time to allow α-phase recrystallization to proceed. Further, the continuous annealing line may include a holding device in place of the soaking zone 7. When the continuous annealing line does not include the soaking zone 7, the induction heating device 9 may be disposed between the portion that has the function of the soaking zone 7 (in the above example, the portion that secures hold time in the heating zone 6 or the holding device) and the cooling zone 8.

### (Induction heating device)

Next, the induction heating device 9 rapidly heats the steel sheet by adjusting output so that the temperature of the steel sheet is in a temperature range from the A₁ transformation temperature to less than the A₃ transformation temperature (about 750 °C to 900 °C). Here, the A₃ transformation temperature is an upper limit temperature at which the γ-phase fraction can be suppressed. The objective of this process is to uniformly raise the temperature of the entire steel sheet to the A₁ transformation temperature or greater in a short time, and also to contribute to downsizing the entire line. Here, the A₁ transformation temperature and the A₃ transformation temperature may vary slightly depending on the composition of the steel sheet. Therefore, an appropriate temperature range is preferably predicted in advance by measurement, calculation, or simulation, and set taking into consideration the error range during annealing.

In DP steel, which is one of the targets of the continuous annealing line according to the present embodiment, arrival temperature in the induction heating device 9 has a large effect on mechanical properties of the final product. Therefore, the heating system of the induction heating device 9 needs to have a fast response to temperature control commands. Further, when heating in such a temperature range, the temperature exceeds the Curie point at which magnetic properties of the steel sheet change, and therefore the induction heating device 9 is preferably a transverse flux type.

Further, in the soaking zone 7, the α-phase recrystallization temperature range is held, and therefore time taken during heating may result in coarsening of α-grains and the induction heating device 9 is preferably capable of rapid heating. The induction heating device 9 may heat at a rate of 10 °C/s to 200 °C/s. When less than 10 °C/s, coarsening of α-grains occurs, and when greater than 200 °C/s, localized high-temperature areas occur in the transverse direction and uniformity is not maintained. The induction heating device 9 more preferably heats at a rate of 20 °C/s or more. The induction heating device 9 more preferably heats at a rate of 100 °C/s or less. When the heating rate is 20 °C/s or more, the line length can be shorter, and when the heating rate is 100 °C/s or less, the risk of buckling deformation of the steel sheet due to thermal stress can be further decreased.

When the induction heating device 9 is used to rapidly heat to the target annealing temperature, it can happen that transformation from α-phase to γ-phase has not yet reached equilibrium immediately after heating. However, when held too long in the vicinity of the target annealing temperature, the transformation from α-phase to γ-phase progresses more than necessary and material property control becomes difficult. Therefore, after reaching the target annealing temperature, it is most desirable to enter the cooling zone 8 as quickly as possible with a hold time of 0 s, and cooling preferably starts in 5 s or less. To avoid non-equilibrium, cooling is started in 10 s or less at the latest, even when held. That is, cooling of the steel sheet starts in the cooling zone 8 in 10 s or less after the heating by the induction heating device 9 is completed.

To meet these conditions, the induction heating device 9 is disposed at a connecting portion connecting the soaking zone 7 and the cooling zone 8. The induction heating device 9 being disposed at the connecting portion is also possible when the induction heating device 9 is added to an existing furnace.

### (Cooling zone)

The cooling zone 8 is apparatus that cools a steel sheet to a defined temperature, and may use gas jet cooling, roll-chilling, water cooling (water quenching), or the like as cooling. As in the present embodiment, the cooling zone 8 may be divided into a plurality of zones, such as the first cooling zone 8A and the second cooling zone 8B, and the thermal hysteresis of a steel sheet during cooling may be controlled by combining different cooling or by changing cooling conditions of the same type of cooling.

### (Thermometer)

For example, at the connecting portion of each zone, a thermometer 12 may be disposed to measure steel sheet surface temperature. The thermometer 12 makes it possible to determine the approximate temperature history of the steel sheet during heat treatment. For example, when the line length is long, as in the soaking zone 7, the thermometer 12 may be disposed in the zone to check the temperature history along the way. The method of temperature measurement is not particularly limited. For example, a radiation thermometer that measures temperature by sensing infrared rays emitted by the steel sheet is suitable. When the thermometer 12 is a radiation thermometer, measurement may be affected by reflected infrared light emitted by the surrounding furnace body, and therefore a cover may be provided between the measuring portion of the radiation thermometer and the detection portion of the steel sheet. Further, emissivity of the steel surface may be affected, and therefore a multiple-reflection measurement method using a wedge-shaped space between the furnace conveyance roller and the steel sheet may be employed.

### (Hot-dip galvanizing bath)

A hot-dip galvanizing bath may follow the cooling zone 8 to apply hot-dip galvanized coating to a steel sheet delivered from the cooling zone 8. Hot-dip galvanizing may be carried out according to a conventional method, and a snout, in-bath roller, and the like may be included as required.

### (Alloying line)

An alloying treatment line may be included following the hot-dip galvanizing bath. In the alloying treatment line, a steel sheet is heated and alloying treatment is applied. The alloying treatment may be carried out according to a conventional method.

### (Other apparatus)

Following the alloying line, a holding zone, a final cooling zone, a temper rolling mill, a straightener, a delivery-side looper, a tension reel, and the like may be further included to improve final product quality and to improve production stability and efficiency. Such apparatus may be included and used according to the quality required for the product and is not limited in any particular way.

### <Phase fraction prediction model>

A phase fraction prediction model is used to predict a phase fraction of a steel sheet during annealing. The phase fraction prediction model precisely predicts the phase fraction of the steel sheet using various input variables related to the transformation of the steel sheet.

According to the present embodiment, the phase fraction prediction model takes the operating conditions and temperature as input variables and the phase fraction of the steel sheet during annealing as an output variable. In generating the phase fraction prediction model, a database held by a host computer that stores performance values and setting values (hereinafter also referred to as "performance data") from operations in the annealing process of thin steel sheets is used. From the performance data stored in the database, labeled data (training data) is prepared in which the performance values of operating conditions and temperature history in an annealing furnace are used as an input performance dataset, and the phase fractions during annealing corresponding to the operating conditions and temperature history are used as output performance data. Subsequently, the phase fraction prediction model is generated by machine learning using the labeled data. Here, according to the present embodiment, the phase fraction prediction model also includes information on steel sheets as input variables. That is, the phase fraction prediction model takes, for example, the composition, dimensions, and temperature of steel sheets and the operating conditions of a continuous annealing furnace as input variables, and the phase fractions of steel sheets during annealing as an output variable.

### (Input variables)

According to the present embodiment, in constructing the machine learning model, the input variables are specifically (a) "alloy content and thickness of steel sheet", (b) "operating parameters", and (c) "temperature history of steel sheet".

With respect to (a) above, "alloy content" refers to the composition of a steel sheet and is information that determines transformation temperature and phase fractions before and after transformation. "Thickness of steel sheet" is the thickness of a steel sheet conveyed to an annealing furnace, and is information that affects temperature increase and cooling rate during annealing. For example, the dimensions of a steel sheet, an input variable for the phase fraction prediction model, includes the thickness of the steel sheet.

With respect to (b) above, "operating parameters" includes, as a required entry, the line speed at which a steel sheet is conveyed through an annealing furnace. This is because the line speed of a steel sheet affects annealing conditions such as heating rate, cooling rate, and soaking time. For example, the operating conditions of a continuous annealing furnace, which is an input variable of the phase fraction prediction model, includes the line speed of a steel sheet. The "operating parameters" may include, for example, at least one of the following items: the pass schedule of a hot rolling process, the cooling start temperature at a hot rolling runout table, the cooling end temperature at a hot rolling runout table, the coiling temperature of a hot-rolled coil and the pass schedule of cold rolling, the set furnace temperature of an annealing furnace and the gas feed rate to a burner. These items make it possible to determine the work ratio applied to a steel sheet (that is, the amount of work strain prior to annealing) and the microstructure state prior to annealing, which increases the precision of predicting transformation temperature and phase fraction. The coiling temperature of a hot-rolled coil is particularly useful. Further, the "operating parameters" may include the useful variable of cold rolling reduction ratio. As performance values for these items, information tied to an annealing furnace charge in actual use is used, but information from rolling steel ingots created in a laboratory smelting furnace may be used.

With respect to (c) above, "temperature history of steel sheet" is the surface temperature of steel sheets measured in an annealing furnace. The "temperature history of steel sheet" includes, as required items, steel sheet temperature immediately before the start of heating and the maximum arrival temperature of the induction heating device 9. The steel sheet temperature immediately before the start of heating may be the steel sheet temperature measured at a point corresponding to entry to the annealing line, entry to the heating zone 6, entry to the soaking zone 7, or entry to the induction heating device 9. The more measurement points, the more accurately the transformation temperature can be determined, thereby improving prediction precision. For example, the temperature of a steel sheet as an input variable for the phase fraction prediction model includes the steel sheet temperature immediately before the start of heating and the maximum arrival temperature of the induction heating device 9. Here, "temperature history of steel sheet" may be discrete temperature data measured or calculated at connecting portions of annealing furnace components. Further, a model may be introduced to predict the surface temperature of a steel sheet at locations where temperature is not measured in order to improve prediction precision and yield rate. The model for predicting steel sheet surface temperature (hereinafter also referred to "steel sheet temperature prediction model") may be a physical model for numerical analysis, and may be a machine learning model. In the case of the machine learning model, labeled data may be used in which input performance data may be annealing furnace operating conditions (line speed, furnace temperatures at each position of the heating zone 6 and the soaking zone 7), alloy content of a steel sheet and cross-section shape (thickness, width), and output performance data may be the measured steel sheet temperatures at each position in the annealing furnace. A steel sheet temperature prediction model is generated by machine learning using such labeled data. The input data for the steel sheet temperature prediction model may further include information on upstream processes. The information on upstream processes may include, for example, at least one of the following: rolling conditions such as reheating temperature and pass schedule in hot rolling and cold rolling processes, and cooling conditions such as cooling start temperature and cooling stop temperature at finishing delivery in the hot rolling process, and coiling temperature.

### (Output variable)

According to the present embodiment, in constructing the machine learning model, the output variable is specifically a measured phase fraction. The measurement of phase fractions may be performed by conducting annealing experiments on steel sheets as laboratory experiments and determining phase fraction from microstructure observations, but is not limited to this example. For example, a data table of phase fractions for various annealing conditions may be created in advance by experimenting with different annealing conditions. According to the present embodiment, in order to predict a phase fraction at maximum arrival temperature of the induction heating device 9, a steel sheet that has reached the maximum arrival temperature in a laboratory experiment is quenched to freeze the microstructure, and the phase fraction is determined by cross-sectional microstructure observation. Further, a steel sheet may be annealed under various conditions in an actual annealing furnace, cooled, and the phase fraction before cooling may be determined by cross-sectional microstructure observation. The phase fraction during annealing may be determined by actual operations or laboratory experiments, or by numerical analysis using a physical model. Any of the above methods may be used to determine the thermal hysteresis and phase fraction of a steel sheet during annealing with respect to operating conditions. Here, the phase fraction of a steel sheet during annealing refers particularly to the phase fraction of the steel sheet from immediately after the end of annealing in the induction heating device 9 to immediately before the start of cooling.

The generation of the phase fraction prediction model is carried out as described above, but the collection of performance data is performed off-line. As performance data, the thermal hysteresis and phase fractions relative to the operating condition dataset with various changes in operating conditions are determined, and labeled data based on the performance data is prepared in a storage device or in the database mentioned above.

### (Machine learning)

Methods of generating the machine learning models are not limited as long as the resulting machine learning models are capable of making predictions with the necessary precision for practical use. For example, commonly used neural networks (including deep learning), decision tree learning, random forests, support vector regression, and the like may be used. Further, an ensemble model combining a plurality of methods may be used. Further, a machine learning model with binarized output may be used as the phase fraction prediction model, which determines whether the phase fraction of a steel sheet is within a predefined phase fraction tolerance range (pass or fail), rather than outputting a calculated value of the phase fraction of a steel sheet. In such a case, classification modeling techniques such as k-nearest neighbors or logistic regression may be used.

### <Operating method (control method)>

According to the present embodiment, the operating conditions of the induction heating device 9 are adjusted based on the phase fraction during annealing obtained (predicted) by the phase fraction prediction model. By executing such control, the annealing temperature of a steel sheet can be adjusted to produce a product having stable mechanical properties.

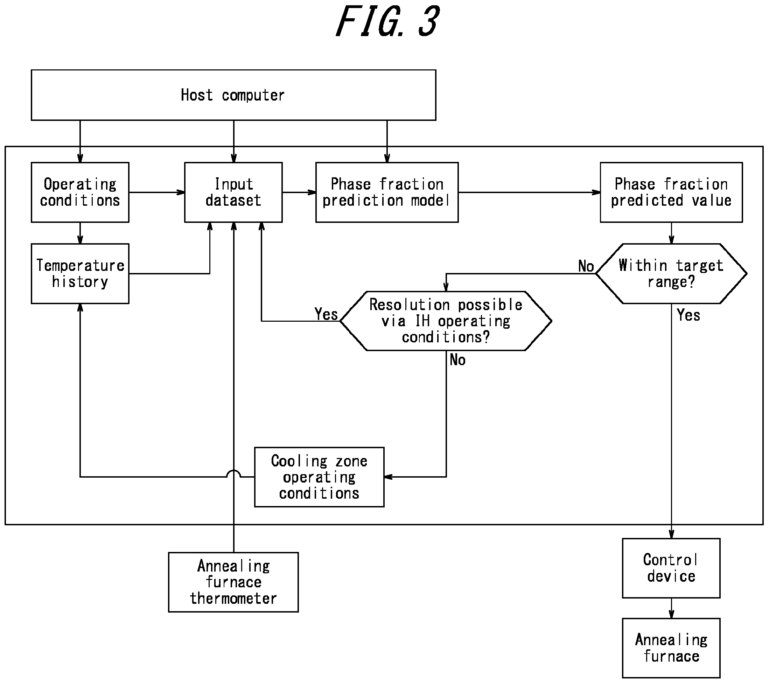

FIG. 3 is a flowchart illustrating an example of a continuous annealing method carried out by the continuous annealing line according to the present embodiment. A control method for heat treatment of a steel sheet using the above phase fraction prediction model is described below.

### (Initial condition setting and phase fraction prediction)

The initial setting of operating conditions is done before the target of control is charged into the annealing furnace. Annealing furnace operating conditions may be standard conditions prepared in advance for each product size and grade, or actual results from past production may be used.

### (Phase fraction determination and condition modification)

A predicted value of phase fraction for the initial settings determined by the phase fraction prediction model ("Phase fraction predicted value" in FIG. 3) is compared with a target phase fraction required for the product (steel sheet). When the predicted value falls outside a set allowable range ("Within target range?" is No in FIG. 3), the operating conditions of the annealing furnace are reset. The resetting of operating conditions is carried out with priority on the output and temperature of the induction heating device 9, which has high responsiveness and control precision. When resolution is possible by changing the IH heating amount ("Resolution possible via IH operating conditions?" in FIG. 3), the changed heating amount is included in the input dataset and the predicted phase fraction is compared with the target again.

When the phase fraction falls within the target range after repeating such prediction, judgment, and resetting ("Within target range?" is Yes in FIG. 3), the operating conditions are reflected in the control. When the phase fraction cannot be adjusted within the target range ("Resolution possible by IH operating conditions?" is No in FIG. 3), the operating conditions of the cooling zone 8 are changed as well ("Cooling zone operating conditions" in FIG. 3). Although less responsive to changes in operating conditions than the induction heating device 9, via the above control flow, the amount by which the mechanical property of the product deviates from the target can be minimized by controlling the apparatus in combination with the induction heating device 9.

In this way, prediction, determination, and resetting are repeated until the phase fraction is within the target range. Once the operating conditions are determined, the determined operating conditions are output to the annealing furnace control device and reflected in the annealing conditions of the product.

### (Update during operation)

The above prediction, determination and resetting processing is used to initially set operating conditions prior to heat treatment of the product. Then, when the actual heat treatment of the product begins, deviation from the estimated thermal hysteresis may occur due to line speed variation or furnace temperature variation caused by annealing furnace combustion control precision. Therefore, the phase fraction prediction model may be updated using newly obtained performance values (for example, values from the "Annealing furnace thermometer" in FIG. 3) even after heat treatment of the product has started.

### (Target material)

The continuous annealing line according to the present embodiment anneals steel material, including DP steel, to stably obtain a target mechanical property. As a specific example, a target steel sheet may contain, in mass%: C from 0.03 % to 0.25 %, Si from 0.01 % to 2.50 %, Mn from 0.50 % to 4.00 %, P up to 0.100 %, S up to 0.0500 %, Sol.Al from 0.005 % to 2.000 %, N up to 0.100 %, and, as required, Cr, Cu, Ni, Sb, Sn (each up to 1.00 %), Mo, V, Ti, Nb (each up to 0.50 %), Ta (up to 0.10 %), Mg, Zr (each up to 0.050 %), B, Ca, REM (each up to 0.0050 %), with the balance being Fe and inevitable impurity. However, as long as there is a need to control a two-phase microstructure of α-phase and γ-phase, target steel sheets are not limited.

Here, coating or plating treatment, alloying treatment, temper rolling, and shape straightening treatment may be carried out on a steel sheet following annealing treatment in the continuous annealing line. Coating or plating treatment and alloying treatment may be carried out according to a conventional method to meet quality requirements for the surface properties of the product and are not particularly limited.

Further, when a shape defect occurs, the shape defect may be corrected by continuing to pass through temper rolling and straightener apparatus. The temper rolling and straightener apparatus are not limited, as long as only shape correction is carried out under conditions that do not affect mechanical properties of a steel sheet.

### EXAMPLES

Table 1 lists conditions and results of thin steel sheet production using a conventional continuous annealing line and the continuous annealing line according to the present embodiment (see FIG. 1). 30 coils of a plurality of strength levels were produced to examine variation in mechanical properties of products. Three strength levels of 780 MPa, 980 MPa, and 1180 MPa grades were produced, and at each strength level, ten coils were produced having three different thicknesses, 1.0 mm, 1.5 mm, and 2.0 mm. Ten slabs of each grade and thickness were each cast in different lots in a continuous casting machine. As a result, although within a production control range, the chemical composition of each slab varied and transformation behavior was not uniform.

### [Table 1]

**(Table 1)**

| | Induction heating device | | Phase fraction prediction model | | | Thickness [mm] | Line speed [mpm] | Heating zone exit steel sheet temp. [°C] | Cooling zone entry steel sheet temp. [°C] | Grade | Tensile strength variation range [%] | Material test failure rate [%] |
|---|---|---|---|---|---|---|---|---|---|---|---|---|
| | Installed or not | **Heating rate** [°C/s] | Used or not | Operating parameters | Priority control target | | | | | | | |
| Comparative Example 1 | No | - | Not used | - | - | 1.0, 1.5, 2.0 | 60 to 120 | 600 to 700 | 750 to 850 | 780 MPa | 10 | 10 |
| | | | | | | | | | | 980 MPa | 15 | 12 |
| | | | | | | | | | | 1180 MPa | 20 | 15 |
| Comparative Example 2 | No | - | Used | LS | Soaking zone furnace temp. | 1.0, 1.5, 2.0 | 60 to 120 | 600 to 700 | 750 to 850 | 780 MPa | 10 | 5 |
| | | | | | | | | | | 980 MPa | 15 | 7 |
| | | | | | | | | | | 1180 MPa | 20 | 11 |
| Comparative Example 3 | Soaking zone exit | 20 to 100 | Not used | - | - | 1.0, 1.5, 2.0 | 60 to 120 | 600 to 700 | 750 to 850 | 780 MPa | 5 | 5 |
| | | | | | | | | | | 980 MPa | 7 | 7 |
| | | | | | | | | | | 1180 MPa | 12 | 11 |
| Comparative Example 4 | Soaking zone exit | 20 to 100 | Used | LS | Cooling zone output | 1.0, 1.5, 2.0 | 60 to 120 | 600 to 700 | 750 to 850 | 780 MPa | 5 | 5 |
| | | | | | | | | | | 980 MPa | 7 | 7 |
| | | | | | | | | | | 1180 MPa | 12 | 11 |
| Example 1 | Soaking zone exit | 15 to 150 | Used | LS | IH output | 1.0, 1.5, 2.0 | 30 to 150 | 600 to 700 | 750 to 850 | 780 MPa | 5 | 0.5 |
| | | | | | | | | | | 980 MPa | 7 | 0.8 |
| | | | | | | | | | | 1180 MPa | 12 | 1 |
| Example 2 | Soaking zone exit | 20 to 100 | Used | LS | IH output | 1.0, 1.5, 2.0 | 60 to 120 | 600 to 700 | 750 to 850 | 780 MPa | 3 | 0.5 |
| | | | | | | | | | | 980 MPa | 4 | 0.8 |
| | | | | | | | | | | 1180 MPa | 6 | 1 |
| Example 3 | Soaking zone exit | 15 **to** 150 | Used | LS | IH output and cooling zone coolant ejection pressure | 1.0, 1.5, 2.0 | 60 to 120 | 600 to 700 | 750 to 850 | 780 MPa | 5 | 0.5 |
| | | | | | | | | | | 980 MPa | 7 | 0.8 |
| | | | | | | | | | | 1180 MPa | 12 | 1 |
| Example 4 | Soaking zone exit | 20 to 100 | Used | LS Hot rolling coiling temp. Cold rolling reduction ratio | IH output | 1.0, 1.5, 2.0 | 60 to 120 | 600 to 700 | 750 to 850 | 780 MPa | 3 | 0.1 |
| | | | | | | | | | | 980 MPa | 4 | 0.1 |
| | | | | | | | | | | 1180 MPa | 6 | 0.5 |

Each slab was subjected to hot rolling and pickling using typical methods, annealing and cold rolling where required, and then annealed in a laboratory and heat-treated using a conventional annealing line or the annealing line according to the present disclosure, followed by cooling, coating or plating, and other post-treatment. The line speed of the steel sheet was 60 mpm to 120 mpm. However, in the case of Example 1, the line speed of the steel sheets was 30 mpm to 150 mpm. Steel sheet temperature at the exit from the heating zone 6 (direct flame heating) was kept in the range from 600 °C to 700 °C to control the surface redox reaction. The steel sheet was then introduced into a radiant tube-type soaking zone 7 for further heating. The residence time in the recrystallization range was 20 s to 60 s. The heating/soaking time after the recrystallization range was 100 s to 200 s. The steel sheet temperature at the exit from the soaking zone 7 (entry to the cooling zone 8) was controlled be in a range from 750 °C to 850 °C. In particular, the furnace temperature of the soaking zone 7 was controlled so that the steel sheet temperature at the exit was at a target value for each grade. The cooling conditions were those set for the purpose of achieving the strength sought for each grade, followed by the coating or plating process and, as required, the alloying process by a conventional method. Appropriate processes were followed according to each application.

Just before the coils were coiled after coating or plating, an inline mechanical property measuring device (IMPOC by EMG Automation GmbH) was set up to measure strength at a frequency of 15 points/minute to 30 points/minute (every 4 m between steel sheets). Strength was measured for the entire length of each coil. In the 780 MPa, 980 MPa, and 1180 MPa grades, the required strength ranges were 780 MPa or more, 980 MPa or more, and 1180 MPa or more, respectively. Therefore, locations where the measured tensile strength did not reach the required strength range were determined to be material test outliers.

Further, tensile test pieces were taken from the leading and trailing ends of the final product coils to measure mechanical properties. Here, the tensile test piece was a JIS No. 5 tensile test piece. Further, tensile testing was carried out according to JIS Z2241.

The maximum variation in tensile strength within a single coil relative to the respective reference strength (TSs: 780 MPa, 980 MPa, or 1180 MPa), expressed as a ratio, was calculated as a tensile strength variation range. The maximum variation range was given by the measured maximum tensile strength (TS_{MAX}) - minimum tensile strength (TS_{MIN}). The tensile strength variation range was given by ΔTS [%] = 100 × (TS_{MAX} - TS_{MIN})/TSs.

Further, locations that were determined to be material test outliers were cut off in a subsequent process. The ratio of the weight (or length) of the cutoff steel sheet to the weight (or length) of one coil was calculated as the material test outlier ratio [%]. Tensile strength variation range and material test failure rate were determined for each coil. The average values for ten coils of each grade are listed in Table 1 as evaluation results.

Comparative Example 1 is an example where the induction heating device 9 was not used and the phase fraction prediction model was also not used. Because annealing conditions were not optimized for each coil, the tensile strength variation range was 10 % or greater for all grades. Further, due to the lack of rapid response in furnace temperature adjustment, steel sheet annealing progressed under inappropriate annealing conditions when switching grades, and there were many material test outlier portions that did not meet the standard strength, mainly at the leading and trailing ends of the coils.

Comparative Example 2 is an example where a phase fraction prediction model was applied. The phase fraction prediction model predicted the phase fraction just prior to the start of cooling using the steel sheet composition, sheet thickness, and temperature history of the steel sheet as input variables, as well as the line speed of the steel sheet. Based on the predicted phase fraction, annealing conditions were adjusted. Although the optimum annealing conditions could be found for each coil, and the material test failure rate was slightly reduced, the tensile strength variation range remained high because of the time required to adjust the annealing conditions. Here, an input variable for the phase fraction prediction model in Comparative Example 2 was the line speed (line speed of the steel sheet, denoted as "LS" in Table 1).

Comparative Example 3 is an example produced by an annealing line according to the configuration illustrated in FIG. 1, in which the induction heating device 9 is disposed at the exit from the soaking zone 7. The introduction of the induction heating device 9 made it easier to precisely achieve target annealing conditions, and there was a slight improvement in the tensile strength variation range. However, the operating conditions of the induction heating device 9 were determined by furnace operating conditions and the like, and therefore resulting annealing conditions were not optimal in some cases, and a certain amount of material test outliers remained.

Comparative Example 4 is an example where the phase fraction prediction model was applied to Comparative Example 3. Comparative Example 4 is an example of attempting to determine final mechanical properties by controlling the cooling conditions based on the predicted phase fraction. The introduction of the induction heating device 9 and optimization of cooling conditions resulted in a generally acceptable range for the steady-state portion of the coil, but the response delay when switching annealing conditions was not improved, resulting in material test outliers, especially at the leading and trailing ends of the coil.

Example 1 is an example where the induction heating device 9 and the phase fraction prediction model were introduced, and conditions of the induction heating device 9 were changed based on the predicted phase fraction. The induction heating device 9 used for this example had a heating capacity of 15 °C/s to 150 °C/s, and therefore the heating rate was adjusted within that range based on the predicted phase fraction. As a result, optimum annealing conditions were found for each coil, and responsiveness when adjusting annealing conditions was improved. According to Example 1, the material test failure rate was significantly improved.

For Example 2, adjustments were made while limiting the heating rate of the induction heating device 9 used for Example 1 to be within a suitable range. As a result, there was a case in which the line speed of a steel sheet had to be slightly adjusted, but, as in Example 1, the material test failure rate was improved. Further, for Example 2, it became possible to suppress the upward deviation of tensile strength due to over-annealing, and the tensile strength variation range was also improved.

Example 3 includes an example for which, as a result of phase fraction prediction, optimal annealing conditions could not be obtained within the heating rate range of the induction heating device 9, and a cooling condition (in this case, coolant jet pressure) in the cooling zone was adjusted. Therefore, for Example 3, changes in annealing condition settings were insufficient, particularly at the leading and trailing ends of the coil. Example 3 had a larger range of tensile strength deviation than Example 2.

For Example 4, in addition to alloy content, thickness, temperature history, and line speed of the steel sheet, hot-rolling coiling temperature and cold-rolling total rolling reduction were added to the input variables of the phase fraction prediction model. As a result, the prediction precision of the phase fraction was improved, and the heating by the induction heating device 9 was adjusted accordingly based on the predicted values, resulting in improved tensile strength variation range and material test failure rate.

The present examples confirm that when the induction heating device 9 and the phase fraction prediction model are introduced and the annealing operating conditions are adjusted based on the phase fraction predicted values, giving priority mainly to the conditions of the induction heating device 9, it is possible to rapidly adjust to optimal annealing conditions and improve the yield rate of steel sheets.

As described above, the continuous annealing line, continuous annealing method, method of producing a cold-rolled steel sheet, and method of producing a coated or plated steel sheet can precisely predict steel sheet phase fractions at high temperature conditions according to the configurations described above. Further, annealing conditions can be rapidly adjusted to reflect predicted changes in phase fraction, which improves product yield rate.

Although embodiments of the present disclosure have been described based on the drawings and examples, it should be noted that a person skilled in the art may make variations and modifications based on the present disclosure. Therefore, it should be noted that such variations and modifications are included within the scope of the present disclosure. For example, functions and the like included in each component and step may be rearranged, and a plurality of components and steps may be combined into one or divided, as long as no logical inconsistency results. An embodiment according to the present disclosure may be realized as a program executed by a processor provided to a device or as a storage medium on which the program is stored. The scope of the present disclosure should be understood to include these examples.

According to an embodiment described above, the zinc pot 11 was described as a galvanizing tank in which a thin steel sheet is dipped, but another coating or plating treatment may be carried out. The coating or plating treatment may be, for example, electro galvanization treatment, hot-dip galvanizing treatment, or galvannealing treatment.

Further, for example, a program stored in a storage (for example, memory) of a process computer may be read and executed by a processor of the process computer to generate a phase fraction prediction model and to execute calculations using the phase fraction prediction model. The phase fraction prediction model may be stored in the storage of the process computer.

### REFERENCE SIGNS LIST

- 1: payoff reel
- 2: welder
- 3: electrolytic cleaning device
- 4: entry-side looper
- 5: preheating zone
- 6: heating zone
- 7: soaking zone
- 8: cooling zone
- 8A: first cooling zone
- 8B: second cooling zone
- 9: induction heating device
- 11: zinc pot
- 12: thermometer

## Claims

1. A continuous annealing line for a steel sheet, comprising a heating zone, a soaking zone, and a cooling zone, in this order, and further comprising:
at least one induction heating device disposed between the soaking zone and the cooling zone; and
a control device configured to set an operating condition of the induction heating device based on a phase fraction during annealing obtained by a phase fraction prediction model.

2. The continuous annealing line according to claim 1, wherein the phase fraction prediction model is a machine learning model generated using labeled data in which composition, a dimension, and a temperature of the steel sheet and an operating condition of a continuous annealing furnace are input variables and the phase fraction of the steel sheet during annealing is an output variable.

3. The continuous annealing line according to claim 2, wherein the dimension of the steel sheet includes the thickness of the steel sheet,
the temperature of the steel sheet includes steel sheet temperature immediately before the start of heating and the maximum arrival temperature of the induction heating device, and
the operating condition of the continuous annealing furnace includes the line speed of the steel sheet.

4. A continuous annealing method for a steel sheet that is passed through a heating zone, a soaking zone, and a cooling zone, in this order, wherein
at least one induction heating device is disposed between the soaking zone and the cooling zone, the method comprising:
a step of setting an operating condition of the induction heating device based on a phase fraction during annealing obtained by a phase fraction prediction model.

5. The continuous annealing method according to claim 4, wherein the phase fraction prediction model is a machine learning model generated using labeled data in which composition, a dimension, and a temperature of the steel sheet and an operating condition of a continuous annealing furnace are input variables and the phase fraction of the steel sheet during annealing is an output variable.

6. The continuous annealing method according to claim 5, wherein
the dimension of the steel sheet includes the thickness of the steel sheet,
the temperature of the steel sheet includes steel sheet temperature immediately before the start of heating and the maximum arrival temperature of the induction heating device, and
the operating condition of the continuous annealing furnace includes the line speed of the steel sheet.

7. The continuous annealing method according to any one of claims 4 to 6, wherein
the induction heating device heats the steel sheet at a rate of 10 °C/s or more and 200 °C/s or less, and
cooling of the steel sheet in the cooling zone is started in 10 s or less after the end of heating by the induction heating device.

8. A method of producing a cold-rolled steel sheet, the method comprising annealing of the steel sheet, which is a cold-rolled steel sheet, by an annealing method adjusted by the continuous annealing method according to claim 7.

9. A method of producing a coated or plated steel sheet, the method comprising applying a coating or plating treatment to a surface of the steel sheet annealed by the method of producing a cold-rolled steel sheet according to claim 8.

10. The method of producing a coated or plated steel sheet according to claim 9, wherein the coating or plating treatment is electrogalvanization treatment, hot-dip galvanizing treatment, or galvannealing treatment.
